**Europäisches Patentamt**

**European Patent Office**

**Office européen des brevets**

(19)

(11) Veröffentlichungsnummer: **0 126 988**
**A1**

(12) # EUROPÄISCHE PATENTANMELDUNG

(21) Anmeldenummer: **84104722.8**

(22) Anmeldetag: **26.04.84**

(51) Int. Cl.³: **H 02 P 5/16**

(30) Priorität: **29.04.83 DE 3315664**

(43) Veröffentlichungstag der Anmeldung:
**05.12.84 Patentblatt 84/49**

(84) Benannte Vertragsstaaten:
**AT BE CH DE FR GB IT LI NL SE**

(71) Anmelder: **Siemens Aktiengesellschaft**
**Berlin und München Wittelsbacherplatz 2**
**D-8000 München 2(DE)**

(72) Erfinder: **Treffer, Gerhard, Dipl.-Ing.**
**Eichenstrasse 2**
**D-8028 Taufkirchen(DE)**

(54) **Steuerschaltung zur Drehzahlregelung eines Gleichstrommotors.**

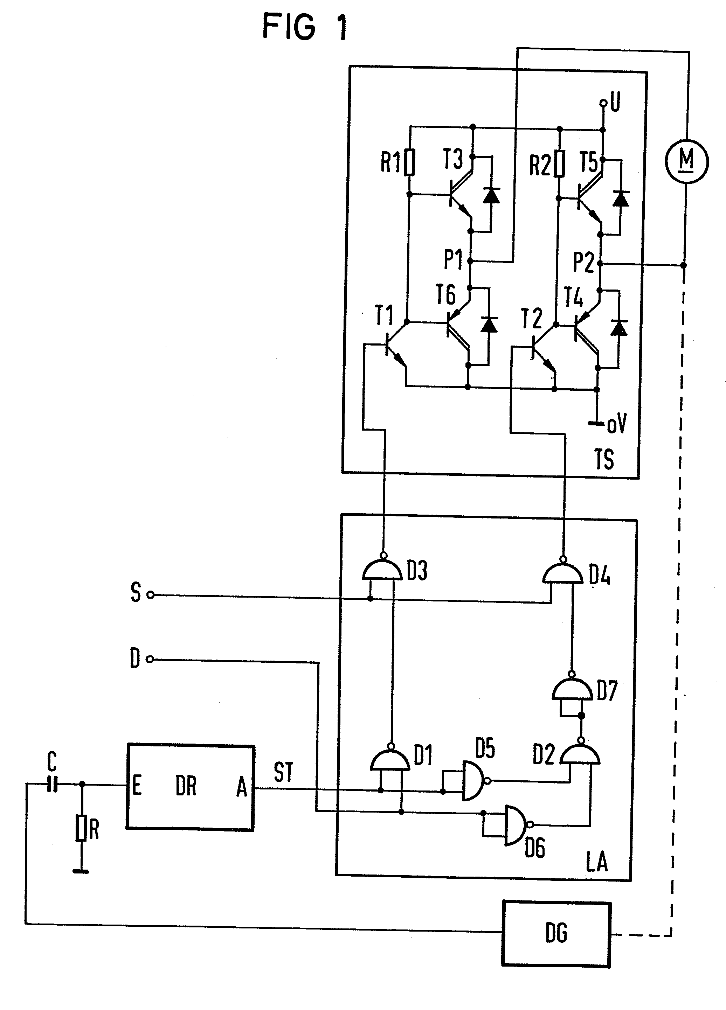

(57) Die Erfindung betrifft eine Steuerschaltung zur Drehzahlregelung eines Gleichstrommotors (M) mit einem Drehzahlregelbaustein (DR) und einem Drehzahlgeber (DG). Der Gleichstrommotor (M) wird von einer Transistorschaltbrücke (TS) gespeist. Ein Steuersignal (ST), das vom Drehzahlregelbausetin (DR) abgegeben wird, steuert über eine logische Anordnung (LA) die Transistorschaltbrücke (TS) an (Fig. 1).

FIG 1

EP 0 126 988 A1

SIEMENS AKTIENGESELLSCHAFT
Berlin und München

Unser Zeichen
VPA 83 P 1309 E

**0126988**

Steuerschaltung zur Drehzahlregelung eines Gleichstrommotors

Die Erfindung betrifft eine Steuerschaltung gemäß dem Oberbegriff des Patentanspruches 1.

Bekannte Steuerschaltungen (s. "Technische Mitteilung" aus dem Bereich Bauelemente, Fa. Siemens, Integrierte Drehzahlregelschaltung TCA 955) der eingangs genannten Art arbeiten im Impulsbetrieb ähnlich einem Gleichspannungswandler, mit dem die Versorgungsspannung für den Gleichstrommotor auf den benötigten Gleichspannungswert eingestellt wird. Dabei werden Drehzahlabweichungen zu höheren Drehzahlen hin durch die Reibung im Gleichstrommotor bzw. im angetriebenen System, und durch die Bremswirkung der elektromotorischen Kraft im Gleichstrommotor selbst abgebaut. Dies geschieht bei niedrigen Drehzahlen (ca. 300 u/min) sehr langsam, da die elektromotorische Kraft bei niedrigen Drehzahlen gering ist.

Es sind weitere Steuerschaltungen zur Drehzahlregelung eines Gleichstrommotors bekannt (s. SGS-ATES Design Note DN 370 und 371), bei denen integrierte Schaltkreise und getaktete Motorstromtreiber verwendet werden. Diese regeln den Strom für den Gleichstrommotor entsprechend der Abweichung von der vorgegebenen Drehzahl. Die Motorstromtreiber sind aufwendige Schaltungen, und es werden weiter teuere, umschaltbare bipolare Sollwertgeber oder bauteileintensive umschaltbare, invertierende bzw. nicht invertierende Verstärkerschaltungen benötigt.

Kro 1 Obh / 28. April 1983

0126988

Bei Nadel- bzw. Tintenmosaikdruckern wird ein Druckerwagen verwendet, der das Nadel- bzw. Tintendruckwerk entlang einem Aufzeichnungsträger bewegt. Zur Bewegung des Druckerwagens wird ein Antrieb benötigt, der geringe Geschwindigkeitsschwankungen aufweist. Da aus Toleranz- und Kostengründen zwischen Druckerwagen und antreibendem Gleichstrommotor kein Getriebe verwendet wird, sind diese geringen Geschwindigkeitsschwankungen bei relativ niedrigen Drehgeschwindigkeiten (ca. 300 u/min) des Gleichstrommotors einzuhalten. Weiter ist ein rasches Abbremsen des Druckerwagens im sogenannten Start-Stop-Betrieb und am Zeilenende bzw. bei Drehrichtungsumkehr notwendig.

Es ist Aufgabe der Erfindung, eine Steuerschaltung anzugeben, die eine verlustarme Drehzahlregelung und ein rasches Abbremsen eines Gleichstrommotors mit permanentmagnetischer Erregung ermöglicht.

Diese Aufgabe wird erfindungsgemäß durch die im kennzeichnenden Teil des Patentanspruchs 1 angegebenen Merkmale gelöst.

Bei einer vorteilhaften Ausgestaltung wird zwischen Transistorschaltbrücke und Drehzahlregelbaustein eine bipolare Anordnung geschaltet, so daß ein Start-Stop-Betrieb und eine Drehrichtungswahl möglich ist.

Besonders vorteilhaft ist die Verwendung der erfindungsgemäßen Steuerschaltung bei einem Druckerwagenantrieb in einer Druckmaschine, da hierdurch ein rasches Abbremsen bis zum Stillstand und ein gleichmäßiger Transport gewährleistet sind.

Im folgenden wird die erfindungsgemäße Schaltungsanordnung anhand eines in der Zeichnung dargestellten Ausführungsbeispieles erläutert. Dabei zeigen

Fig. 1 die erfindungsgemäße Steuerschaltung mit einem Gleichstrommotor und einem Drehzahlgeber, und

Fig. 2 ein schematisches Impulsdiagramm.

Bei der folgenden Beschreibung der erfindungsgemäßen Steuerschaltung wird von dem bekannten integrierten Schaltkreis TCA 955 der Firma Siemens ausgegangen, der in der "Technischen Mitteilung" aus dem Bereich Bauelemente, ausführlich in Aufbau und Wirkungsweise beschrieben ist. Weiter sind dieser Literaturstelle die Belegung der Anschlüsse des integrierten Schaltkreises und die Beschaltung derselben mit externen Widerständen und Kondensatoren zu entnehmen.

In der Fig. 1 sind ein Drehzahlregelbaustein DR, eine logische Anordnung LA, eine Transistorschaltbrücke TS, ein Gleichstrommotor M und ein Drehzahlgeber DG dargestellt.

Der Drehzahlregelbaustein DR ist ein Baustein, der zur Konstanthaltung der Drehzahl des Gleichstrommotors M dient, und wird beispielsweise durch den oben erwähnten integrierten Schaltkreis TCA 955 realisiert. An einem Eingang E (Pin 3 des TCA 955) des Drehzahlregelbausteins DR liegt über ein Differenzierglied das vom Drehzahlgeber DG erzeugte Signal an.

Der Drehzahlgeber DG erzeugt in bekannter Weise ein, der Drehzahl des Gleichstrommotors M proportionales Signal. Dazu wird beispielsweise eine auf dem Rotor des Gleichstrommotors M befestigte Segmentscheibe verwendet. Diese wird von einer feststehenden Lichtschranke abgetastet. Weitere Beispiele für einen Drehzahlgeber DG sind der oben erwähnten "Technischen Mitteilung" zu entnehmen.

Das Differenzierglied am Eingang E des Drehzahlregelbausteines DR, das aus einem Kondensator C und einem Widerstand R gebildet wird, dient dazu, um auch bei unsymmetrischen Signalen, speziell unsymmetrischen binären Signalen des Drehzahlgebers DG einen sicheren Betrieb zu gewährleisten.

An einem Ausgang A (Pin 16 des TCA 955) des Drehzahlregelbausteins DR wird ein Steuersignal ST abgegeben. Dieses
wird über die logische Anordnung LA auf die Transistorschaltbrücke TS gegeben. Die Transistorschaltbrücke TS
steuert dann direkt den Gleichstrommotor M an.

Die logische Anordnung besteht aus invertierenden UND-Verknüpfungsgliedern. An der logischen Anordnung LA liegen
neben dem Steuersignal ST auch ein Start-Stop-Signal S
und ein Drehrichtungssignal D an. Das Steuersignal ST
liegt an einem invertierenden UND-Verknüpfungsglied D1,
und über ein invertierendes UND-Verknüpfungsglied D5,
an einem invertierenden UND-Verknüpfungsglied D2 an. Das
Drehrichtungssignal D liegt ebenfalls am invertierenden
UND-Verknüpfungsglied D1, und über ein invertierendes
UND-Verknüpfungsglied D6 auch am invertierenden UND-Verknüpfungsglied D2 an. Das Start-Stop-Signal S liegt jeweils an einem invertierenden UND-Verknüpfungsglied D3
und einem invertierenden UND-Verknüpfungsglied D4 an. Am
anderen Eingang des invertierenden UND-Verknüpfungsgliedes
D3 ist der Ausgang des invertierenden UND-Verknüpfungsgliedes D1, und am anderen Eingang des invertierenden
UND-Verknüpfungsgliedes D4 ist der Ausgang des invertierenden UND-Verknüpfungsgliedes D2 über ein invertierendes UND-Verknüpfungsglied D7 angeschaltet. Die Ausgänge
der beiden invertierenden UND-Verknüpfungsglieder D3 und
D4 sind mit der Transistorschaltbrücke TS verbunden. Die mit D1 bis D4 bezeichneten invertierenden UND-Verknüpfungsglieder sind beispielsweise durch den integrierten Schaltkreis SN74LS03, und die mit D5 bis D7 bezeichneten, durch
den integrierten Schaltkreis SN74LS04 realisiert.

Durch das Start-Stop-Signal S wird bei Anlegen ein der logischen Eins entsprechenden Potentials die Drehbewegung
des Gleichstrommotors M freigegeben. Bei Anliegen ein der
logischen Null entsprechenden Potentials wird die Drehbewegung des Gleichstrommotors M abgebremst. Entsprechend der
Ansteuerschaltung des Gleichstrommotors M an die Transistorschaltbrücke TS, wird bei Anliegen ein der logischen Eins
bzw. der logischen Null entsprechenden Potentials, und bei
einer Freigabe durch das Start-Stop-Signal S, vom Gleichstrommotor M eine Links- bzw. eine Rechtsdrehung ausgeführt.

Die Transistorschaltbrücke TS ist in bekannter Weise aufgebaut. Vier Transistoren T3 bis T6 sind in Brückenschaltung
zwischen einer Spannungsversorgung U und einem Bezugspotential 0V angeordnet. Vorzugsweise werden hierfür komplementäre Darlington-Transistoren verwendet. Die Transistoren T3
bis T6 besitzen integrierte Invers-Dioden. Da deren Durchlaßspannung und Sperrverzögerungszeit für ein weitgehend
verlustloses und schnelles Schalten zu groß sind, sind diesen Invers-Dioden diskrete Freilaufdioden, die in der Figur nicht näher bezeichnet sind, parallel geschaltet. Die
Basen der Transistoren T3 und T6 sind mit dem Kollektor
eines Steuertransistors T1 verbunden, der über einen Widerstand R1 an der Spannungsversorgung U und mit seinem Emitter an dem Bezugspotential 0V angeschaltet ist. Analog
sind die Basen der Transistoren T4 und T5 mit dem Kollektor eines weiteren Steuertransistors T2 verbunden, der
über einen Widerstand R2 ebenfalls an der Spannungsversorgung U und mit seinem Emitter an dem Bezugspotential 0V angeschaltet ist. An den Basen der beiden Steuertransistoren T1 und T2 sind die nicht näher bezeichneten Ausgangssignale der logischen Anordnung LA, d.h. die Ausgänge der invertierenden UND-Verknüpfungsglieder D3 und D4, angeschaltet. Zwischen zwei Abgriffpunkten P1 und P2 der Transistorschaltbrücke TS, die jeweils zwischen den Transistoren T3 und T6 bzw. zwischen den Transistoren T4 und T5 angeordnet sind, ist der Gleichstrommotor M angeschaltet.

Wird nur einer der beiden Steuertransistoren T1 und T2 leitend geschaltet, so fließt ein Strom durch den Gleichstrommotor M über einen der Stromzweige, der Transistorschaltbrücke TS, die jeweils aus den Transistoren T5 und T6 oder den Transistoren T2 und T3 gebildet werden. Sind beide Steuertransistoren T1 und T2 leitend oder nicht leitend geschaltet, so fließt kein Strom durch den Gleichstrommotor M.

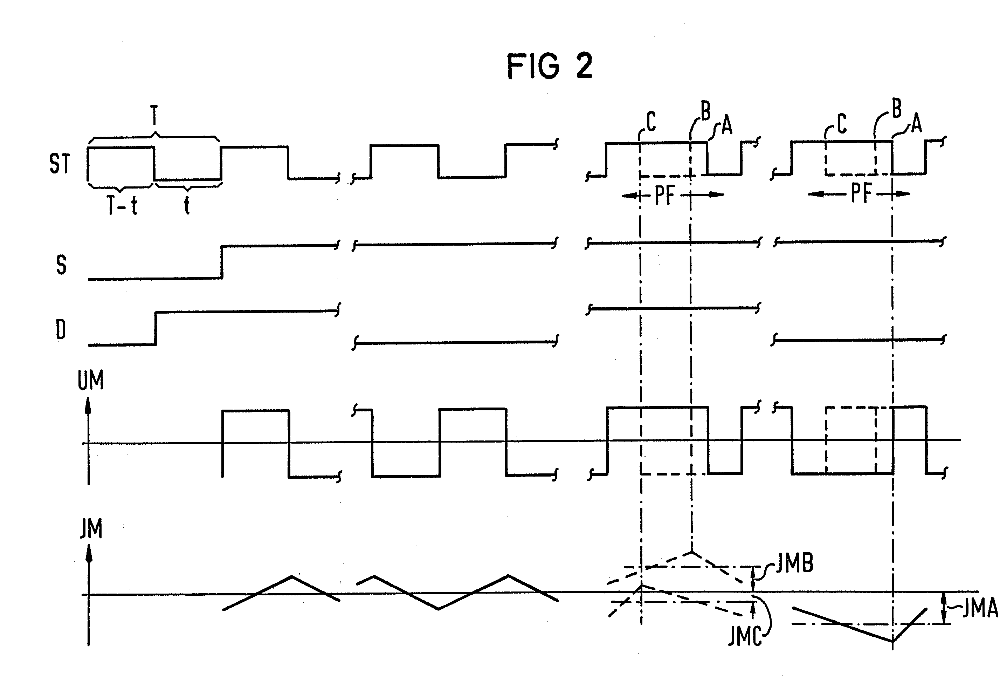

Im folgenden wird die Arbeitsweise der erfindungsgemäßen Steuerschaltung anhand von Fig. 2 näher erläutert. In Fig. 2 ist ein Impulsdiagramm dargestellt, das einige Kombinationen der an der logischen Anordnung LA anliegenden Signale zeigt. Dies sind im einzelnen das vom Drehzahlregelbaustein DR abgegebene Steuersignal ST, das Start-Stop-Signal S, und das Drehrichtungssignal D. Weiter sind in Fig. 2 in Abhängigkeit von diesen Signalen eine am Gleichstrommotor M anliegende Spannung UM, sowie ein durch den Gleichstrommotor M fließender Strom IM dargestellt. Das Steuersignal ST, das Start-Stop-Signal S, und das Drehrichtungssignal D sind binäre Signale, die entweder einen ersten oder einen zweiten Spannungswert annehmen können. Diese Spannungswerte sind beispielsweise ein der logischen Null und ein der logischen Eins entsprechendes Potential. Das Steuersignal ST besitzt eine Periodendauer T, die sich zusammensetzt aus einer Pulspause t und einer Pulszeit T-t. Hierbei ist die Periodendauer T auf Grund einer entsprechenden Beschaltung des Drehzahlregelbausteins DR konstant.

0126988

Wenn sich der Gleichstrommotor M mit konstanter Drehzahl, d.h. mit seiner Solldrehzahl, bewegt, dann ist das Steuersignal ST eine Rechteckwechselspannung mit einer Frequenz von beispielsweise 30kHz. Das Tastverhältnis, d.h. das Verhältnis aus der Pulspause t und der Periodendauer T beträgt in diesem Fall 0,5. Die Pulszeit T-t des Steuersignals ST verändert sich proportional zur Drehzahlabweichung des Gleichstrommotors M von der vorgegebenen Solldrehzahl. Diese Variationsmöglichkeit ist durch die beiden Doppelpfeile PF verdeutlicht. Wenn sich der Gleichstrommotor M zu langsam dreht, so verlängert sich die Pulszeit T-t des Steuersignals ST über einen Punkt B bis hin zu einem Maximalwert, der durch einen Punkt A gekennzeichnet ist. Der Maximalwert ist durch externe Beschaltung festlegbar, entsprechend dem gewünschten maximalen Strom beim Beschleunigen und Bremsen. Wenn sich der Gleichstrommotor M zu schnell dreht, verkleinert sich die Pulszeit T-t des Steuersignals ST bis beispielsweise zu einem Punkt C.

Durch die logische Anordnung wird entsprechend dem Start-Stop-Signal S, der Gleichstrommotor M gestartet bzw. abgebremst, und entsprechend dem Drehrichtungssignal D dreht sich der Gleichstrommotor M nach rechts bzw. nach links. Am Gleichstrommotor M (d.h. zwischen den beiden Punkten P1 und P2) ist nur dann eine Motorspannung UM abgreifbar, wenn das Start-Stop-Signal S ein der logischen Eins entsprechendes Potential besitzt. Wenn das Drehrichtungssignal D ein der logischen Eins entsprechendes Potential besitzt, wird die Recheckwechselspannung des Steuersignals ST von der logischen Anordnung LA nicht invertiert an die Transistorschaltbrücke TS gegeben. Wenn das Drehrichtungssignal D ein der logischen Null entsprechendes Potential besitzt, wird die Rechteckwechselspannung des Steuersignals ST invertiert an die Transistorschaltbrücke TS gegeben.

Durch die von der logischen Anordnung LA abgegebenen Signale (d.h. durch die von den invertierenden ODER-Verknüpfungsgliedern D3 und D4 abgegebenen Signale) werden die Steuertransistoren T1 und T2 der Transistorschaltbrücke TS angesteuert.

Entsprechend dem Steuersignal ST bewirken die Steuertransistoren T1 und T2 eine Polaritätsänderung der Motorspannung UM (zwischen den Punkten P1 und P2 in Fig. 1), und es ändert sich damit der Motorstrom IM durch den Gleichstrommotor M. Das Tastverhältnis des Steuersignals ST (d.h. das Verhältnis von Pulspause t zur Periodendauer T des Steuersignals ST), und damit auch das Tastverhältnis der Motorspannung UM (d.h. der am Gleichstrommotor M anliegenden Wechselspannung) ist proportional zur Drehzahlabweichung des Gleichstrommotors M. Während der Pulszeit T-t, d.h. der Periodendauer T vermindert um die Pulspause t, wird die Induktivität des Gleichstrommotors M mit einem positiven Strom geladen, und während der Pulspause t entladen bzw. mit einem negativen Strom geladen. Wenn die elektrische Zeitkonstante des Gleichstrommotors M sehr viel grösser ist als die Periodendauer T der Rechteckwechselspannung des Steuersignals ST (bzw. der Motorspannung UM), dann ist der Mittelwert des Motorstroms IM bei einem Tastverhältnis kleiner 0,5 positiv, und der Gleichstrommotor M wird beschleunigt. Bei einem Tastverhältnis größer 0,5 ist der Mittelwert des Motorstromes IM negativ, und der Gleichstrommotor M wird abgebremst. Der Mittelwert des Motorstromes IM ist also proportional zum Tastverhältnis des Steuersignals ST, und damit proportional zur Drehzahlabweichung des Gleichstrommotores M. In der Fig. 2 sind diese Mittelwerte des Motorstromes IM positiv als IMB, und negativ als IMA und IMC eingezeichnet.

Der besondere Vorteil der erfindungsgemäßen Steuerschaltung besteht darin, daß durch das aktive Bremsen, d.h. durch das Laden des Gleichstrommotors mit einem der Drehbewegung entgegengesetzten Strom, einerseits auch bei niedrigen Drehzahlen eine gute Drehzahlregelung und andererseits ein rasches Abbremsen möglich sind.

Bei einer besonders einfachen Ausführungsform der erfindungsgemäßen Steuerschaltung, bei der auf einen Start-Stop-Betrieb und eine Drehrichtungswahl verzichtet wird, steuert das vom Drehrichtungsbaustein DR abgegebene Steuersignal ST direkt die Transistorschaltbrücke TS an. Hierbei wird dann beispielsweise das Steuersignal ST direkt auf den Steuertransistor T1 und über einen Inverter auf den Steuertransistor T2 gegeben.

Die erfindungsgemäße Steuerschaltung ist sehr gut zum Antrieb eines hier nicht dargestellten Druckerwagens in einer Druckermaschine geeignet. Für den Antrieb von Nadel- oder Tintenmosaikdruckköpfen ist, um eine hohe Schreibgeschwindigkeit zu erreichen, ein schnelles Abbremsen des mit dem Druckwagen bewegten Druckkopfes notwendig. Weiter ist mit der erfindungsgemäßen Steuerschaltung die Verwendung eines preiswerten Gleichstrommotors M zum Antrieb des Druckwagens möglich. Der Gleichstrommotor M besitzt hierbei gegenüber einem Schrittmotor einen höheren Wirkungsgrad, ein besseres Volumen-Leitungs-Verhältnis sowie eine hohe Drehmomentreserve. Zudem ist mit dem Gleichstrommotor M die Drehzahl in weiten Grenzen einstellbar.

4 Patentansprüche

2 Figuren

0126988

Patentansprüche
────────────────

1. Steuerschaltung zur Drehzahlregelung eines Gleichstrommotors (M) mit einem Drehzahlregelbaustein (DR), der ein
binäres Steuersignal (ST) abgibt, dessen Tastverhältnis
proportional zur Drehzahlabweichung des Gleichstrommotors
(M) ist, und einem Drehzahlgeber (DG),
g e k e n n z e i c h n e t   d u r c h   eine Transistorschaltbrücke (TS), die zwei schaltbare Stromzweige zur
Speisung des Gleichstrommotors (M) aufweist, wobei der
Drehzahlregelbaustein (DR) auf Grund der vom Drehzahlgeber (DG) gelieferten Signale ein Steuersignal (ST) abgibt,
und damit die Stromzweige wechselweise ansteuerbar sind.

2. Steuerschaltung nach Anspruch 1,
d a d u r c h   g e k e n n z e i c h n e t , daß zwischen
dem Drehzahlregelbaustein (DR) und der Transistorschaltbrücke (TS) eine logische Anordnung (LA) geschaltet ist,
an der das Steuersignal (ST), sowie extern zuführbar ein
Start-Stop-Signal (S) und ein Drehrichtungssignal (D) anlegbar sind, so daß auf Grund des Start-Stop-Signals (S)
und des Drehrichtungssignals (D) die Stromzweige der Transistorschaltbrücke (TS) in der Art geschaltet werden, daß
der Gleichstrommotor (M) in zwei Richtungen drehbar ist.

3. Steuerschaltung nach Anspruch 1 oder 2,
g e k e n n z e i c h n e t   d u r c h   Freulaufdioden,
die den Kollektor-Emitterstrecken der Schalttransistoren
(T3 bis T6) der Transistorschaltbrücke (TS) entsprechend
parallel geschaltet sind.

4. Steuerschaltung nach einem der Ansprüche 1 bis 3,
d a d u r c h   g e k e n n z e i c h n e t , daß mit dem
Gleichstrommotor (M) direkt ein Druckerwagen in einer
Druckmaschine angetrieben wird.

0126988

1/2

FIG 1

FIG 2

2/2

0126988

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-3 426 262 (G.J. COLTER) <br> * Gesamte Schrift, insbesondere Spalte 1, Zeile 38 - Spalte 2, Zeile 2; Spalte 2, Zeilen 40-59; Spalte 3, Zeilen 41-74 * | 1,2,4 | H 02 P 5/16 |
| | --- | | |
| A | US-A-3 646 417 (J.V. CASSIE) <br> * Spalte 5, Zeile 34 - Spalte 6, Zeile 69 * | 1,2 | |
| | --- | | |
| A | DE-A-2 722 041 (AGFA-GEVAERT) <br><br> * Seite 10, Zeile 1 und folgende * | | |
| | ----- | | |

**RECHERCHIERTE SACHGEBIETE (Int. Cl. ³)**

G 05 D 13/00
H 02 P 5/00
H 02 P 7/00

Der vorliegende Recherchenbericht wurde für alle Patentansprüche erstellt.

| Recherchenort | Abschlußdatum der Recherche | Prüfer |
|---|---|---|
| BERLIN | 25-07-1984 | GESSNER E A F |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument